# EUROPEAN PATENT SPECIFICATION

(11) **EP 3 479 443 B1**
(45) Date of publication and mention of the grant of the patent: **15.01.2020**
(21) Application number: 16738668.9
(22) Date of filing: 29.06.2016
(51) Int. Cl.: G02B 6/293, H01S 3/08, H01S 3/067, H01S 3/06

(54) **OPTICAL RESONATOR, METHOD OF MANUFACTURING THE OPTICAL RESONATOR AND APPLICATIONS THEREOF**
OPTISCHER RESONATOR, VERFAHREN ZUR HERSTELLUNG DES OPTISCHEN RESONATORS UND ANWENDUNGEN DAVON
RÉSONATEUR OPTIQUE, PROCÉDÉ DE FABRICATION DU RÉSONATEUR OPTIQUE ET SES APPLICATIONS

(43) Date of publication of application: 08.05.2019
(73) Proprietor: CSEM Centre Suisse d'Electronique et de Microtechnique SA - Recherche et Développement, 2002 Neuchâtel (CH)
(72) Inventor: HERR, Tobias, 1110 Morges (CH); LECOMTE, Steve, 1233 Bernex (CH)
(74) Representative: v. Bezold & Partner Patentanwälte - PartG mbB
(86) International application number: PCT/EP2016/001102
(87) International publication number: WO 2018/001442

(56) References cited:
- WO-A1-2015/005107
- US-A- 5 425 039
- US-A1- 2005 220 163

## Description

### Field of the invention

The present invention relates to an optical resonator comprising an optical waveguide, like e.g. an optical fibre, being mounted to a ferrule. Furthermore, the invention relates to an optical apparatus including the optical resonator, a method of manufacturing the optical resonator and applications of the optical resonator. The invention can be applied in the fields of linear or non-linear, active or passive laser optics, in particular for broadband optical frequency generation, optical pulse generation, ultra-low noise microwave generation, optical spectroscopy, pulsed or continuous-wave lasing or laser frequency stabilization.

### Background of the invention

Optical resonators, in particular optical micro-resonators, are generally known as a rapidly emerging technology platform with widespread applications ranging from fundamental physics to applications such as spectroscopy, low noise microwave generation and optical data transfer. Different resonator geometries exist, including Fabry-Perot type resonators, wherein the light is reflected back and forth between two resonator mirrors, or travelling wave resonators, in particular ring resonators, wherein the light is propagating along a closed trajectory guided by total internal reflection off the resonator walls. Both, Fabry-Perot and ring resonators have been applied in a variety of configurations in conjunction with continuous wave (cw) or pulsed laser sources, in both linear and non-linear optical modes of operation. If the optical resonator includes an active gain material, active lasing has been obtained as well.

Designing and operating optical resonators, in particular micro-resonators, face several major challenges in terms of input and output coupling of light (light coupling), dispersion control, mode design and non-resonant (or not coupled) input suppression. In particular, ring resonators use light coupling e.g. via a tapered optical fibre, a micro-photonics waveguide or a prism coupler. These light coupling methods are, however, mechanically fragile or inefficient. Furthermore, the prism coupler typically is not broadband in terms of wavelength. With Fabry-Perot resonators, light coupling is facilitated as it is done at one of the resonator mirrors, e.g. by coupling of the resonator to the adjacent free space or a waveguide.

The optical group velocity dispersion (GVD) is another important characteristic of optical resonators, in particular for non-linear optical modes of operation, but also for linear resonators. Dispersion engineering, i.e. providing a GVD suitable for the particular application of the optical resonator, is challenging within unsatisfactory and constraining limitations. Relevant design parameters that influence GVD are the material of the optical resonator and its geometrical shape. However, these parameters, in particular the material properties, cannot be freely chosen, and the parameters also affect the presence of higher order modes in the resonator. Therefore, true dispersion engineering for optical micro-resonators as it is routinely done in laser engineering via chirped Bragg mirrors, has not been demonstrated so far.

The mode design of an optical resonator typically aims the provision of only one single mode (or single mode family) for a properly chosen polarization in the optical resonator. Single-mode characteristics are obtained in Fabry-Perot resonators, while it is difficult to achieve them in other types of micro-cavities. Fabry-Perot resonators are also preferred for the non-resonant input suppression, which can be achieved if one mirror is used for input and the other mirror is used for output coupling.

In view of the above challenges in light coupling, mode design and suppression of non-resonant input, multiple Fabry-Perot resonators based on optical fibres have been proposed (see e.g. US 2005/063430 A, US 5 305 335 A, US 5 425 039 A, WO 2009/064935 A2, DE 3 311 808 A, US 2012/307251 A, and D. Braje et al. in "Physical Review Letters", vol. 102, 193902 (2009)).

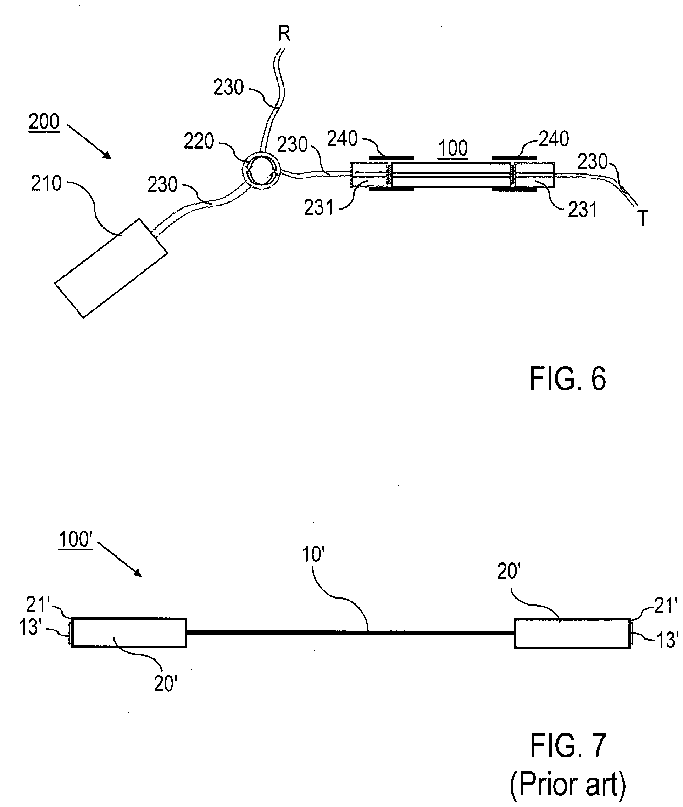

D. Braje et al. disclose an optical fibre based micro-resonator 100', which is schematically illustrated in Figure 7 (prior art). The optical resonator 100' comprises an optical fibre 10' with a length of several cm, wherein the fibre ends are mounted into separate fibre ferrules 20'. End facets 21' of the ferrules 20' are coated with reflective coatings providing resonator mirrors 13'. Light is coupled into and out of the optical resonator 100' via one of the resonator mirrors 13' into the adjacent free space. The monolithic provision of the resonator mirrors 13' with the optical fibre 10' has an advantage for simplifying the fabrication of the device. However, the optical resonator 100' described by D. Braje et al. has several disadvantages.

Firstly, the provision of the two separate ferrules 20' for mounting the ends of the optical fibre 10' results in a mechanically flexible and fragile system. During operation, the flexible fibre section between the ferrules 20' is prone to disturbance due to acoustic noise, mechanical vibration and temperature changes.

Furthermore, the long optical length of several cm may result in an uncontrolled mixture of non-linear effects in the optical resonator 100', e.g. by four-wave mixing and simultaneous stimulated Brillouin scattering.

Furthermore, the long fibre resonator of D. Braje et al. is integrated in the optical system as a free-standing element, wherein the laser for driving the resonator is coupled from a free-space beam using lenses. This free-space coupling is highly sensitive to mechanical perturbations and difficult to implement in industrial systems.

Finally, the optical resonator 100' of D. Braje et al. has a dispersion, which is fully determined by the dispersion of the optical fibre 10'. Accordingly, dispersion engineering is restricted to the choice of the fibre material.

WO 2015/005107 A1 discloses a laser source including an excitation laser element and a resonator with an active fibre based laser medium. The resonator has a structure, which includes an outer ferrule accommodating a jacket of the optical fibre. The resonator is arranged in a tube-shaped thermally-conductive member with a distance between output mirrors of the resonator and the ends of the member. The mirrors have a reflectivity around 92 % to 95 %, resulting in a high cavity round trip loss. The optical device of WO 2015/005107 A1 has a limited application as a laser source only. US 2005/220163 A1 discloses a semiconductor laser module with a semiconductor laser element and an external resonator, which comprises an optical fibre mounted inside a ferrule and having resonator mirrors formed by Bragg gratings. The resonator is adapted for in-coupling and out-coupling of excitation of laser light into the free space.

### Objective of the invention

It is an objective of the invention to provide an improved optical resonator, being capable of avoiding disadvantages of conventional optical resonators. In particular, the objective of the invention is to provide an optical resonator, in particular a Fabry-Perot resonator, having an improved mechanical stability, improved light coupling capability, additional degrees of freedom in dispersion engineering, facilitated mode design, in particular single mode design, and/or reduced uncontrolled non-linear effects. Another objective of the invention is to provide an improved optical apparatus including at least one optical resonator, avoiding disadvantages of an optical apparatus including a conventional optical resonator. Furthermore, it is an objective of the invention to provide an improved method of manufacturing an optical resonator avoiding limitations of conventional methods of manufacturing optical resonators.

### Brief summary of the invention

These objectives are solved by an optical resonator, an optical apparatus and/or a method of manufacturing an optical resonator as defined in the independent claims. Advantageous embodiments and applications of the invention are defined in the dependent claims.

According to a first general aspect of the invention, the above objective is solved by an optical resonator comprising an optical waveguide being provided with resonator mirrors and being mounted to a ferrule. According to the invention, the ferrule accommodates the full length of the optical waveguide. Advantageously, the optical resonator comprises one single ferrule only holding the complete optical waveguide, so that the mechanical stability and robustness are essentially improved and the sensitivity to acoustic noise is reduced compared with the conventional technique of D. Braje et al..

The optical waveguide generally comprises a solid material having an elongated shape and being capable of guiding light fields. The waveguide material is a transparent material, e. g. fused silica, or fluoride glass or crystal, being adapted for light guiding from one end of the ferrule to the other. Optionally, the waveguide material can provide optical non-linearity and/or optical gain. In the latter case, the optical resonator is a laser resonator.

The optical waveguide extends with a linear optical axis between two waveguide end facets. A lateral surface of the optical waveguide facing in radial directions relative to the optical axis, provides a lateral waveguide face. According to the invention, the single ferrule extends along the full longitudinal length of the optical waveguide, i.e. along the length of the lateral waveguide face, in particular from one waveguide end facet to the other waveguide end facet. Except from the waveguide end facets, the optical waveguide is completely covered by the ferrule.

The resonator mirrors comprise reflecting structures being arranged at the optical waveguide, wherein a resonator section of the optical waveguide is enclosed by the resonator mirrors. The resonator mirrors with the resonator section form an optical cavity, which, depending on the waveguide geometry and waveguide material(s) has specific resonant waveguide properties.

The ferrule (or: ferrule connector, in particular fiber ferrule) generally comprises a rigid sleeve- or tube-shaped component accommodating an optical waveguide, in particular an optical fibre, and providing a termination of the waveguide for connection purposes. The ferrule provides a mechanical structure supporting the whole optical waveguide. The ferrule has an inner shape receiving the outer shape of the waveguide to be accommodated and an outer shape, in particular cylindrical shape, adapted to an inner shape of an optical connector (socket connector, in particular ferrule connecting sleeves). In other words, the ferrule is an optical waveguide connector being configured for connecting an optical waveguide with another optical waveguide or active or passive optical elements, like lasers, photo-detectors or free space optical setups or connectors thereof. Preferably, the ferrule is a connector component being adapted to standardized connectors, in particular de *facto* standards or industrial ferrule types for optical waveguides, used in optical waveguide setups. Contrary to conventional ferrules, the ferrule of the inventive optical resonator, including the optical waveguide, terminates and can be adapted as a connector at both ends thereof.

Preferably, a ferrule size in the dimension orthogonal to the optical axis is smaller or equal to 5 mm. In particular, the ferrule can be of cylindrical shape with an outer diameter smaller or equal to 5 mm. As special cases, the fiber ferrule may be of cylindrical shape with an outer diameter according to fiber ferrule of *de facto* standards or industrial fiber ferrule types, such as an outer diameter of 3.175 mm, 3.14 mm, 2.5 mm or 1.5 mm according to the fiber ferrule types FSMA, SMA 905/906, SMC, E-2000, FC, SC, SC-DC or LC.

Advantageously, the invention provides a compact, dielectric and monolithic optical Fabry-Perot resonator, in particular a micro-resonator having sub-cm scale optical path length between the resonator mirrors (e. g. optical path length equal to or below 1 cm) and micro-meter scale optical mode field diameter (e. g. optical mode field diameter equal to or below 100 pm). As a further important advantage, the enclosure of the optical waveguide in the ferrule provides a compatibility with optical standards, in particular fibre optical standards facilitating the application of the invention in industrial laser systems. Furthermore, the inventive optical resonator can be used in a linear optical operating regime, e.g. as reference cavity or filter, or in a non-linear optical regime, e.g. for light wavelength conversion or optical switching. Further applications of the inventive optical resonator are outlined below.

Generally, the resonator mirrors comprise Bragg reflector structures being arranged on the waveguide end facets. According to a preferred embodiment of the invention, both resonator mirrors comprise Bragg reflector structures deposited on the waveguide end facets (first embodiment of the invention). Accordingly, advantages in terms of designing the resonator mirrors independently of the waveguide material are obtained. Furthermore, the manufacturing of the optical resonator and the adaptation thereof to a particular application are facilitated.

According to a preferred variant of the first embodiment of the invention, the waveguide end facets are aligned with the ferrule facets. Accordingly, as the resonator mirrors are arranged on the waveguide end facets, the resonator mirrors project beyond the ferrule facets. This variant has particular advantages for adjusting the optical path length of the resonator section by simultaneous mechanical processing, in particular polishing, the waveguide end facets and the ferrule facets at each of the ends of the optical resonator.

According to an alternative variant (no embodiment of the invention), end pieces of the optical waveguide providing the waveguide end facets are not fully covered by the ferrule e.g. as a result of a convex surface curvature of the optical waveguide material at the ends thereof. The protruding end pieces preferably have a longitudinal length along the optical axis below 1 mm. The waveguide end facets and the resonator mirrors on the waveguide end facets project beyond the ferrule facets. This variant may have particular advantages in terms of shaping the waveguide end facets and the resonator mirrors.

Advantageously, with a further preferred modification of the first embodiment, the resonator mirrors fully cover the waveguide end facets and at least partially cover the ferrule facets. Accordingly, the resonator mirrors extend not only on the waveguide end facets, but also on at least a portion of the surface area of the ferrule facets. Advantageously, this features facilitates the provision of the resonator mirrors and the manufacturing of the optical resonator.

According to another variant (no embodiment of the invention), the ferrule extends along the length of the optical waveguide and the thickness of the resonator mirrors arranged on the waveguide end facets. Accordingly, exposed surfaces of the resonator mirrors are aligned with the ferrule facets, resulting in advantages for coupling the ferrule with other optical components, like e.g. standard waveguide mating sleeves.

According to the first embodiment of the invention, the resonator mirrors comprise dielectric mirrors, each having a stack of dielectric layers with different refractive indices. The materials and thicknesses of the dielectric layers can be optimized in dependency on the particular application of the optical resonator. According to a particularly preferred embodiment of the invention, the dielectric layers within the stack of the dielectric layers are provided with varying thicknesses, which are selected for adjusting a GVD of the optical resonator. Designing the GVD of the resulting Fabry-Perot resonator independently of the selection of the waveguide material represents an essential advantage of the invention. The GVD can be freely selected such that non-linear optical effects in the optical resonator are controlled and balanced.

Preferably, the optical resonator is adapted for light coupling via a direct contact of the ends of the optical waveguide including the resonator mirrors with adjacent waveguides, e.g. optical fibres. With a preferred example, the ferrule has an outer shape and size being adapted to standard optical connector mating sleeves. This type of coupling has not been used before. The inventors have found that a particular protection of the resonator mirrors from damage is not necessary as the outer layers of the dielectric mirrors have a low or even negligible contribution to the whole reflection properties of the resonator mirrors. Advantageously, even if a damage of the outer layer should occur, this would not substantially influence the properties of the optical resonator. If the stack of dielectric layers of the dielectric mirrors is designed such that at least one of the outer layers (top layers) are mechanically less sensitive compared with the remaining dielectric layers, advantageously, a further protection of the resonator mirrors is obtained. Preferably, the at least one top layer has a larger hardness compared with the remaining dielectric layers. The top layers fulfil a double function by providing a contribution to the reflection in the dielectric mirror and protecting the dielectric mirror against damage.

According to an alternative variant, the resonator mirrors comprise Bragg reflector structures, which are included in the optical waveguide (no embodiment of the invention). The Bragg reflector structures comprise Bragg waveguide reflectors having periodic variations of the refractive index of the waveguide material, which is obtained e.g. by ultra-violet light exposure or by doping the waveguide material. As an example, the Bragg waveguide reflectors are located adjacent to the waveguide end facets. According to a further modification of the alternative variant, exposed ends of the Bragg waveguide reflectors are aligned with the ferrule facets.

With the first embodiment of the invention, the resonator mirrors are designed in dependency on their function in the optical resonator. With a preferred example, one of the resonator mirrors is adapted for reflecting as much as possible, i. e. it has a close to 100 % or up to 100 % reflectivity (according to the invention at least 99.9 %), while the other resonator mirror has a lower reflectivity, in particular a partial reflectivity (and a non-zero transmission) so that its optical loss is approximately half the overall optical loss of the resonator. According to the invention, the other resonator mirror has a partial reflectivity of at least 99 % to close to 100 %. Accordingly, this resonator mirror can be used for light coupling into or out of the optical resonator. According to an alternative example (no embodiment of the invention), both of the resonator mirrors may have a reduced reflectivity (below 100 %, e.g. in the range of 99 % to close to 100 % so that the optical loss of each mirror is approximately half the overall optical loss of the resonator. Accordingly, light coupling can be obtained on both sides of the optical resonator.

According to a further preferred embodiment of the invention, the resonator mirrors are orthogonal to the propagation direction of light in the optical waveguide. The resonator mirrors are arranged such that reflecting surfaces thereof are orthogonal to the optical axis of the optical waveguide at least in the centre of the waveguide end facets. With a plane shape, the complete resonator mirrors are orthogonal to the optical axis of the optical waveguide.

According to a further advantageous feature of the invention, the resonator mirrors comprises curved, e.g. spherical, parabolic or ellipsoid mirrors having a curvature, which is selected for optimizing the resonator operation, in particular for providing a maximum back-reflection of light fields into the optical waveguide. With a curved resonator mirror, the orthogonal orientation means that the reflecting surface thereof is orthogonal to the local propagation direction of the light fields in the curved sections of the reflecting surfaces.

According to a particularly preferred variant of providing curved resonator mirrors, at least one of the resonator mirror, which is arranged for light coupling, has a radius of curvature, which is selected such that the resonator mirror compensates for a diffraction related beam expansion of the light field exciting the optical waveguide. Accordingly, the light coupling efficiency of the optical resonator is essentially improved.

According to a further preferred embodiment of the invention, the optical waveguide has a waveguide core and a waveguide cladding, which are designed for single mode guidance of light fields. Advantageously, the optical resonator is a compact single mode resonator. With a preferred application of the invention, a waveguide core of the optical waveguide has a diameter (core diameter), which is adapted to a core diameter of an optical single mode fibre. In particular, the diameter of the optical waveguide is equal to or below 125 µm, and a mode field diameter in the optical waveguide is equal to or below 100 µm.

Advantageously, the material and shape of the optical waveguide can be selected in dependency on the particular application of the optical resonator. For example, the optical waveguide can be provided with an inner tapered section. The diameter of the optical waveguide in the inner tapered section is smaller compared with the diameter of the optical waveguide at the waveguide end facets. Providing the inner tapered section can result in advantages for the optical non-linearity of the optical resonator. According to a further example, the optical waveguide comprises multiple sections forming a combined waveguide, wherein each section has specific waveguide properties, like e.g. waveguide geometry and waveguide material. The waveguide sections may extend along the whole length of the optical waveguide between the waveguide end facets. Alternatively, the waveguide sections may be serially arranged along the length of the optical waveguide.

According to a particularly preferred embodiment of the invention, the optical waveguide comprises at least one optical fibre and the ferrule comprises a fibre ferrule. Advantageously, a broad range of applications of optical fibre based optical resonators exist and the fibre based resonator in a single ferrule can be easily adapted to these applications. Depending on the particular application, multiple types of optical fibres can be provided as the optical waveguide, like e.g. a single mode fibre, a polarization maintaining fibre, a dispersion compensated fibre, a highly non-linear fibre, a doped gain-waveguide fibre, a hollow core fibre (preferably combined with compact core fibre sections), a single-crystal fibre, a photonic crystal fibre, an ultra-violet compatible fibre, a mid-infrared compatible fibre, a multi-mode fibre or a fibre comprising dielectric material carrying a reflective coating along the longitudinal length thereof.

If the optical waveguide comprises multiple waveguide sections, the fibre based optical resonator embodiment may comprise multiple optical fibres being spliced and/or stacked together. Advantageously, splicing and/or stacking optical fibres provides further degrees of freedom designing the material and geometry of the optical waveguide and in particular the mode structure thereof. Stacked optical fibres comprise multiple different optical fibres being coupled in series along the longitudinal length of the optical waveguide, thus forming a combined waveguide.

Another important advantage of the invention results from the miniaturization of the optical resonator. Preferably, the optical waveguide has a longitudinal length equal to or below 5 cm, in particular equal to or below 2 cm. For creating an optical micro-resonator, the length can be shortened down to values equal to or below 1 mm. Advantageously, the length of the optical resonator is restricted, so that unwanted non-linear effects can be suppressed.

According to a further preferred feature of the invention, the longitudinal length of the optical waveguide is selected such that the optical resonator has a free-spectral range of at least 1 GHz, in particular at least 10 GHz. Advantageously, this results in a broad range of practical applications of the optical resonator.

According to a second general aspect of the invention, the above objective is solved by an optical apparatus including a light source device, in particular a laser source device, like a cw or pulsed laser, and at least one optical resonator according to the above first aspect of the invention. Advantageously, the optical apparatus can be provided with a compact design, in particular if the light paths between the light source device, the at least one optical resonator and optional further optical components can be provided by optical waveguides, in particular optical fibres.

According to a particularly preferred embodiment of the invention, the at least one optical resonator is connected via fibre optical connectors with the other components of the optical apparatus. Advantageously, light coupling between the optical resonator and the other components is improved due to increased efficiency of light coupling and reduced sensitivity against mechanical influences.

According to a third general aspect of the invention, the above objective is solved by a method of manufacturing an optical resonator according to the above first aspect of the invention. The inventive method includes the step of fixing the optical waveguide in the ferrule, shortening and polishing ends of the ferrule, wherein two ferrules facets and aligned waveguide end facets are created, and providing the resonator mirrors at the waveguide end facets. Preferably, the optical waveguide is fixed in the ferrule by a glue bonding step.

According to a further preferred feature of the manufacturing method, a ferrule is used, which has a non-constant conic inner shape of at least one ferrule opening. The optical waveguide is introduced into this conic opening and fixed within the ferrule. The shortening and polishing step preferably includes removing the part of the ferrule having the conic inner shape.

In summary, the inventive optical resonator has the following advantages.

Firstly, the performance and optical characteristics of a resonator depends critically on its optical mode spectrum. Conventional resonators exhibit a multi-mode structure leading to complex system behaviour that is different for each resonator. Advantageously, the inventive optical resonator facilitates the provision of single-mode characteristics, in particular by using a single-mode optical fibre as the optical waveguide. As the main advantage, reproducible and controllable system characteristics are obtained.

Furthermore, the inventive resonator can be tailored for all envisioned applications by dispersion engineering without compromising the single-mode characteristic of the resonator. As the inventive optical resonator relies on industry grade fibre optic technology, fibre optic connection standards can be employed to achieve optical light coupling to the micro-resonator. The increased coupling efficiency results in reduced power requirements.

Optical coupling to conventional optical micro-resonators has substantial limitations in terms of alignment and maintenance of the light coupling as thermal or mechanical influences can easily degrade or even damage the light coupling to the resonator. Therefore, conventional micro-resonator setups often need a protection and vibration isolation. On the contrary, the inventive optical resonator is mechanically and thermally stable (due to its small size the resonator can easily be insulated and temperature stabilized). The use of standard fibre optic connection techniques and dimensions will allow reliable connections of the micro-resonator to standard optical fibres. It is one of the surprising results of the inventors that in the inventive optical resonator the mechanical contact of a connected fibre with the resonator mirrors, in particular highly reflective coatings of the cavity, is not detrimental for the device performance. This allows for highly simplified light coupling and enhanced mechanical robustness of the optical resonator in an all-fibre system.

Further advantages and details of the invention are described in the following with reference to the attached drawings, which show in:
- Figures 1 to 4:: schematic cross-sectional views of the optical resonator according to the first embodiment of the invention;
- Figure 5:: a schematic cross-sectional view of the optical resonator according to an alternative variant (no embodiment of the invention) ;
- Figure 6:: a schematic illustration of a laser apparatus according to a preferred embodiment of the invention; and
- Figure 7:: a schematic illustration of a conventional fibre-based optical resonator (prior art) .

Embodiments of the invention are described in the following with exemplary reference to an optical resonator including an optical fibre as the optical waveguide. It is emphasized that the invention is not restricted to the use of optical fibres, but rather possible with other types of optical waveguides, e.g. (potentially doped) solid rods of glass, crystals or semiconductor material. Furthermore, reference is made in particular to the use of a single-mode optical fibre as the optical waveguide. The implementation of the invention is not restricted to this example, but rather possible with the other types of optical fibres as mentioned above.

The drawings show enlarged cross-sectional views of the optical resonator, wherein the details of the resonator are schematically shown for illustrative purposes. In practice, in particular the thickness of the resonator mirrors and the diameter of the optical waveguide are essentially smaller compared with the dimensions of the ferrule.

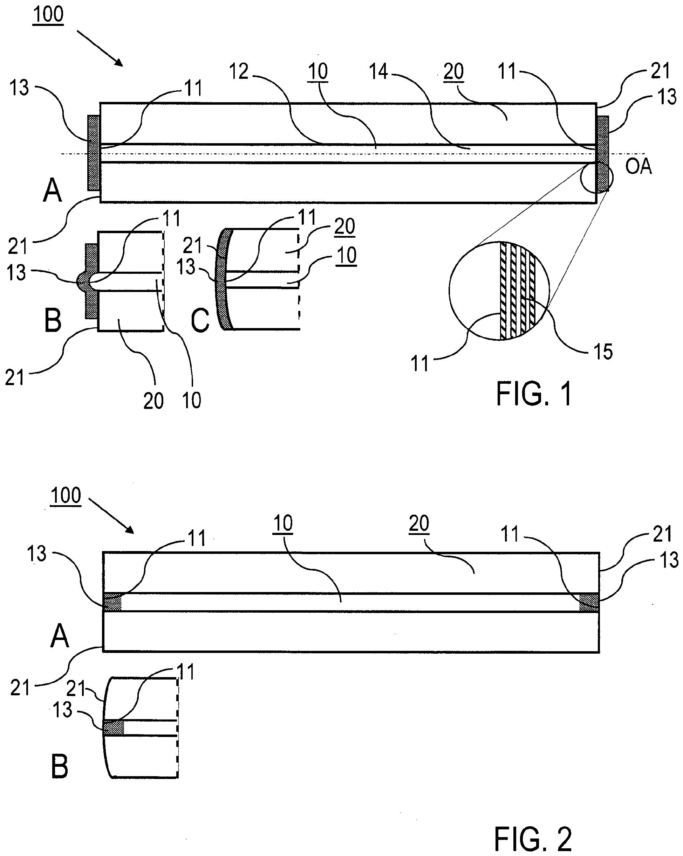

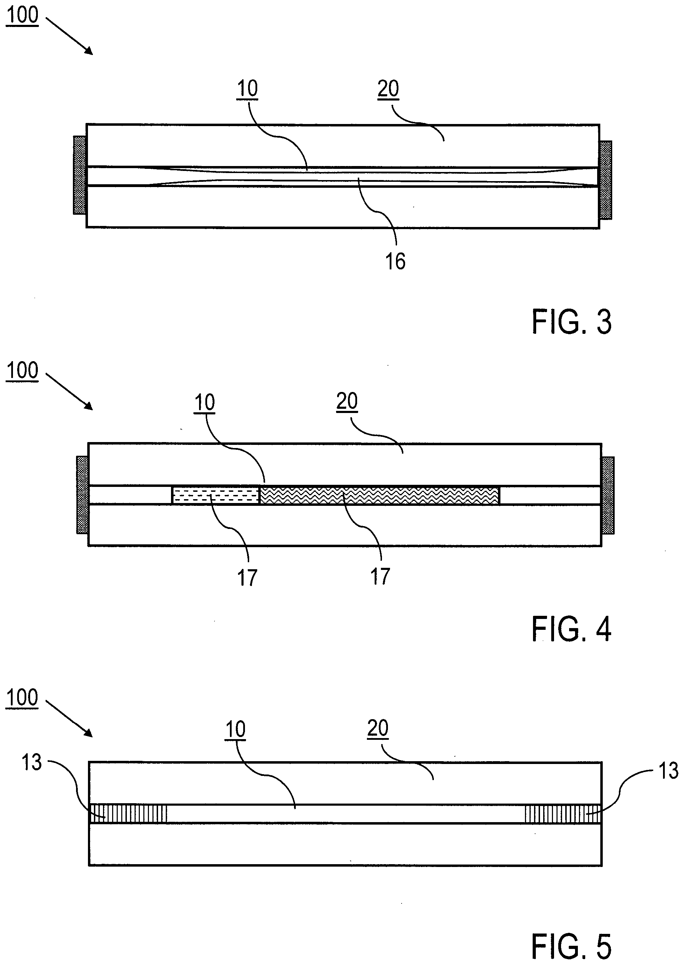

Figures 1 to 4 illustrate embodiments of the inventive optical resonator 100, comprising a ferrule 20 and an optical waveguide 10 with resonator mirrors 13. Figures 1 to 4 show the first embodiment of the optical resonator 100, wherein the resonator mirrors 13 comprise dielectric mirrors (stacks of dielectric layers) arranged on waveguide end facets 11 of the optical waveguide 10. Figure 5 shows an alternative variant of the optical resonator 100 (no embodiment of the invention), wherein the resonator mirrors 13 comprise Bragg waveguide reflectors included in the optical waveguide 10.

According to Figure 1A, the optical waveguide 10 comprises an optical fibre that is mounted inside the ferrule 20. The optical fibre 10 is a standard single-mode fibre, e.g. made of plastics or glass, with an outer diameter of e.g. 125 µm. Instead of the single-mode fibre any other fibre type can be used as mentioned above, in particular a polarization maintaining fibre, a dispersion compensated fibre, a highly non-linear fibre (for enhancing non-linearity), a doped gain fibre (for supporting lasing) or mid-infrared compatible fibre (e.g. for molecular spectroscopy).

The optical waveguide 10 has waveguide end facets 11 carrying the resonator mirrors 13. A lateral waveguide face 12 is provided by the lateral surface of the optical waveguide 10 facing in radial directions relative to the optical axis OA. The lateral waveguide face 12 is fully covered by the ferrule 20. A resonator section 14 is spanned between the resonator mirrors 13.

The ferrule 20 is a straight cylindrical component having a longitudinal bore with an inner diameter adapted to the outer diameter of the optical waveguide at least at the ends thereof. The central axis of the ferrule simultaneously defines the optical axis OA of the optical waveguide 10. The ferrule 20 is made of a ceramic, e.g. zirconia or aluminium nitride, or a metal, e.g. steel with an outer diameter of a standard off-the-shelf ferrule, e.g. 3.175 mm and a longitudinal length below 1 cm.

The optical fibre 10 and the ferrule 20 are polished at both axial ends and coated with reflective coatings providing the resonator mirrors 13. At least on one side, the reflective resonator mirror 13 is semi-transparent (e.g. 99,999 % reflection or 0.0001 % transmission), to allow light coupling into and out of the optical resonator 100.

The resonator mirrors 13 are made of stacks of dielectric layers 15 (see enlarged sectional image). The dielectric layers 15 are designed with alternatingly higher or lower refractive indices and thicknesses such that the desired reflectivity is obtained according to the requirements of the practical application of the optical resonator 100. As an example, stack with a number of up to hundred layers made of high refractive index transparent materials such as oxides or fluorides with thickness below one optical wavelength.

The design of the dielectric resonator mirrors 13 can be done by using standard software tools for designing dielectric mirrors. The resonator mirrors 13 are created e. g. by ion beam sputtering. Advantageously, the dielectric layers 15 can be designed for adjusting the GVD of the resonator mirrors, in particular for dispersion engineering, e.g. to achieve normal, anomalous, zero or more complex group velocity dispersion profiles as required by the different practical applications of the optical resonator 100.

According to Figure 1A, the waveguide end facets 11 and the ferrule facets 21 are aligned by the shortening and polishing step of the method for manufacturing the optical resonator 100 (see below). Accordingly, the resonator mirrors 13 are deposited on the common plane (or curved, see Figure 1C) surface provided by the waveguide end facets 11 and the ferrules facets 21. Although it would be sufficient to restrict the resonator mirrors 13 to the cross-section of the optical waveguide 10, larger resonator mirrors 13 can be preferred, which at least partially also cover the ferrule facets 21 (as shown).

With further practical examples, the ferrule length is approximately 10 mm and the used fiber is a standard single mode silica fiber (SMF28) or a polarization maintaining highly-nonlinear silica fiber (HNLF). The resulting free-spectral range of the resonators is approximately 10 GHz. The resonance width is approximately 100 kHz to 15 MHz, resulting in a finesse in the order of 10³ to 10⁵. The coating is applied to the resonator end facet via ion-beam sputtering resulting in a mechanically robust reflector coating and the device can be connected manually via standard fiber-optic mating sleeves to a standard PM or non-PM fiber without measurably affecting the reflector coating's quality.

Figure 1B illustrates one end of another implementation of the first embodiment of the optical resonator with the optical waveguide 10 inside of the ferrule 20, wherein a curved waveguide end facet 11 extends in longitudinal direction beyond the ferrule facet 21. According to the curved shape of the waveguide end facet 11, the resonator mirror 13 has a curved shape as well. Advantageously, the convex surface structure improves light back reflection into the optical waveguide 10 (optical fibre). The optical resonator can be dimensioned e. g. as mentioned with reference to Figure 1A. The radius of curvature of the waveguide end facet 11 is selected in a range of e.g. half a waveguide diameter to 30 mm. Figure 1C illustrates another modification of the invention, wherein the waveguide end facet 11 of the optical waveguide 10 and the ferrule facet 21 of the ferrule 20 provide a curved end surface carrying the resonator mirror 13. Again, light back reflection into the waveguide is improved by the curved shape of the resonator mirror. The optical resonator and the radius of curvature can be dimensioned e. g. as mentioned with reference to Figure 1A and 1B.

Figures 2A and 2B illustrate another implementation of the first embodiment of the optical resonator 100, wherein the resonator mirrors 13 on the waveguide end facets 11 of the optical waveguide 10 are covered by the ferrule 20. The exposed surfaces of the resonator mirrors 13 are aligned with the ferrule facets 21. This alignment can be provided with a plane facet shape (Figure 2A) or a curved facet shape (Figure 2B) .

Figure 3 illustrates the first embodiment of the optical resonator 100 similar to the implementation of Figure 1, wherein the optical waveguide 10 has a tapered section 16 within the ferrule 20. At the tapered section 16, the optical waveguide 10 has an outer diameter of e.g. 10 µm. The spacing between the tapered section 16 and the inner surface of the ferrule 20 can be filled by a glue.

Another modification of the first embodiment is shown in Figure 4, wherein the optical waveguide 10 includes multiple waveguide sections 17 (schematically illustrated). The materials and lengths of the waveguide section 17 are selected for providing predetermined waveguide properties, e.g. for designing nonlinear optical properties of the optical waveguide 10. One example could be having a central photonic crystal (holey fiber) spliced to two ends of standard single mode fiber on which the mirrors are deposited.

The alternative variant of the optical resonator 100 is schematically shown in Figure 5. With this variant (no embodiment of the invention), the resonator mirrors 13 are formed by Bragg waveguide reflectors in the material of the optical waveguide 10, e. g. an optical fibre. The optical waveguide 10, including the resonator mirrors 13, is completely covered by the ferrule 20. The Bragg waveguide reflectors can be designed similar to the design of the dielectric mirrors such that the reflectivity/transmission of the resonator mirrors 13 is adjusted. As an example, the reflectivity of the Bragg waveguide reflectors can be adjusted by the longitudinal length thereof. Preferably, the resonator mirrors 13 have a longitudinal length in a range from 10 µm to 5 mm.

The optical resonator 100 according to the invention, e.g. the implementation of Figures 1A or 1C, is manufactured according to the following method.

Firstly, an optical fibre for providing the optical waveguide 10 and the ferrule 20 are prepared with an axial length slightly above the final length of the optical resonator 100 to be obtained. The optical fibre 10 is glued into the ferrule 20 as it is known from standard procedures of mounting optical fibres to fibre ferrules.

Both sides of the ferrule 20 including the optical waveguide 10 are shortened and polished to align the waveguide end facets 11 and the ferrule facets 21, to adjust the optical path length of the optical fibre 10 and to achieve low surface roughness. Shortening and polishing, in particular wet polishing is provided on both sides of the ferrule 20. Optionally, grinding of the surfaces can be provided before polishing. Polishing on both sides is continued until the desired length of the optical waveguide 10 is reached.

Preferably, the ferrule 20 is shortened at least to the point where the inner bore diameter of the ferrule 20 reaches its narrowest width. Advantageously, this results in a precise centre alignment and a removal of excess glue at the ends of the optical fibre 10. The glue comprises e.g. an epoxy glue.

Subsequently, the resonator mirrors 13 are deposited by ion beam sputtering. The dielectric layers 15 are deposited according to the GVD to be obtained. Finally, the optical resonator is ready for use, e.g. in a laser apparatus 200 of Figure 6.

The exemplary embodiment of Figure 6 shows a laser apparatus 200 with a laser source device 210 and at least one optical resonator 100 according to the invention. The optical resonator 100 is connected with the laser source device 210 via a circulator 220 and optical fibres 230 connecting the laser source device 210 with the circular resonator 220 and the circular resonator 220 with the optical resonator 100.

Figure 6 illustrates the connection of the resonator 100 with the optical fibre 230 via fibre optical connectors 231, and in particular ferrule connecting sleeves 240, which accommodate one end of the optical resonator 100 and corresponding fibre optical connectors (fibre ferrules) 231 attached to the optical fibres 230.

With the setup of Figure 6, a reflection signal R of the optical resonator 100 can be obtained via the circular resonator 220, while a transmission signal T of the optical resonator 100 is obtained at the second end thereof.

It is noted that the application of the invention is not restricted to the setup of Figure 6, but rather possible e.g. with one of the following applications.

As an example, the optical resonator 100 can be included in a soliton-pulse generator, wherein the optical resonator is driven by a cw laser. With this embodiment, the longitudinal length of the optical resonator 100 (cavity length) is selected according to the desired pulse repetition rate. The free-spectral range (FSR) of the optical fibre resonator is larger than the Brillouin gain bandwidth to avoid unwanted stimulated Brillouin scattering. Furthermore, the resonator mirrors 13 are adjusted for a weakly anomalous GVD.

According to a further application, the optical resonator 100 is included in a frequency comb generator using four-wave mixing, a microwave generator and a general generator for optical telecommunication (see EP 1 988 425 B1). With this embodiment, the cavity length is selected according to the desired frequency comb line spacing. The FSR is larger than the Brillouin gain bandwidth to avoid unwanted stimulated Brillouin scattering. The resonator mirrors 13 are provided with weakly anomalous GVD. For intrinsically low noise systems (in particular for telecom applications) strongly anomalous GVD is provided.

In the case of a channel generator, the length of the optical resonator 100 is selected such that the generated lines are spaced according to telecom standard, e.g. by 12.5, 25 or 50 GHz.

According to another application of an optical resonator, it is provided as the active element in a resonant supercontinuum generator (no embodiment of the invention). With this embodiment, the optical resonator 100 is driven by a modulated laser source device. The GVD is engineered according to the desired spectral energy distribution of the supercontinuum radiation to be generated. Phase matching allows an enhancement of the spectral power in certain wavelength regions, similar to dispersive waves. The cavity length and the FSR are matched to the pulse repetition rate of the driving laser source device.

A Brillouin laser is a further example of an application of an optical resonator 100, which is driven by a cw laser (no embodiment of the invention). With this application, the cavity length and the FSR are matched to stimulated Brillouin shift frequency. The GVD is engineered such that competing non-linear effects, such as four-wave mixing are suppressed, e.g. via normal GVD.

According to another application, the optical resonator 100 can provide a cw laser, which is driven by a multi- or single-mode pump light (no embodiment of the invention). The cavity length is selected in accordance with the finesse and doping concentration of the optical fibre 10. With this example, a GVD design is not necessary.

Alternatively, a mode-locked laser can be provided by the optical resonator 100, which is driven by multi- or single-mode pump light (no embodiment of the invention). The cavity length is selected according to the desired pulse repetition rate and the resonator mirrors 13 are adjusted for providing a weak anomalous GVD to allow for soliton effects.

Finally, the optical resonator can provide a passive reference cavity or optical filter. It is used in combination with narrow or broadband laser sources. For obtaining the filter function, the cavity length is selected according to the desired FSR. For broadband applications, the GVD and higher order dispersion terms are close to zero. For narrowband applications, priority is given to optimizing the coating of the resonator mirrors 13 for high cavity finesse.

## Claims

1. Optical resonator (100), comprising
- an optical waveguide device (10) having an optical axis (OA) and extending with a longitudinal length between two waveguide end facets (11),
- resonator mirrors (13) comprising dielectric mirrors each having a stack of dielectric layers (15) and being arranged on the waveguide end facets (11) for enclosing a resonator section (14) of the optical waveguide device (10), and
- a ferrule (20) having two ferrule facets (21), wherein the optical waveguide device (10) is mounted to the ferrule (20), wherein
- the ferrule (20) extends along the full longitudinal length of optical waveguide device (10),
**characterized in that**
- the resonator mirrors (13) provides a passive optical cavity, wherein
- one of the resonator mirrors (13) has a reflectivity of at least 99.9 % and the other resonator mirror has a reflectivity of at least 99 %.

2. Optical resonator according to claim 1, wherein
- the optical resonator (100) is adapted for light coupling via a direct contact of the ends of the optical waveguide device (10) including the resonator mirrors (13) with adjacent waveguides.

3. Optical resonator according to one of the foregoing claims, wherein
- the waveguide end facets (11) are aligned with the ferrule facets (21), and
- the resonator mirrors (13) at least partially cover the ferrule facets (21).

4. Optical resonator according to one of the foregoing claims, wherein
- the dielectric layers (15) in at least one of the stacks of dielectric layers have varying thicknesses, wherein
- the thicknesses of the dielectric layers (15) are selected for adjusting a group velocity dispersion of the optical resonator (100).

5. Optical resonator according to one of the foregoing claims, wherein
- the dielectric mirrors are arranged such that less sensitive dielectric layers are exposed at the outer ends of the optical resonator, and/or
- the resonator mirrors (13) are arranged such that reflecting surfaces thereof are orthogonal to the optical axis (OA) of the optical waveguide device (10) at least in the centre of the waveguide end facets (11).

6. Optical resonator according to one of the foregoing claims, wherein
- the resonator mirrors (13) are curved mirrors with a curvature being selected for optimizing back-reflection of light fields into the optical waveguide device (10).

7. Optical resonator according to claim 6, wherein
- at least one of the resonator mirrors (13) has a radius of curvature selected such that it compensates for a diffraction related beam expansion of the light field exiting the optical waveguide device (10).

8. Optical resonator according to one of the foregoing claims, wherein
- the optical waveguide device (10) is configured as a single mode optical waveguide with a waveguide core and a waveguide cladding.

9. Optical resonator according to claim 8, wherein
- the optical waveguide device (10) has a core diameter of the waveguide core adapted to a core diameter of an optical single mode fiber, and/or
- the optical waveguide device (10) has an outer diameter equal to or below 125 µm and a mode field diameter equal to or below 100 µm.

10. Optical resonator according to one of the foregoing claims, wherein
- the optical waveguide device (10) has an inner tapered section (16), and/or
- the optical waveguide device (10) comprises multiple sections (17) forming a combined waveguide, wherein each section has specific waveguide properties.

11. Optical resonator according to one of the foregoing claims, wherein
- the optical waveguide device (10) comprises at least one optical fibre and the ferrule (20) comprises a fibre ferrule.

12. Optical resonator according to claim 11, comprising at least one of the features
- the at least one optical fibre comprises a single mode fibre, a polarization maintaining fibre, a dispersion compensated fibre, a highly nonlinear fibre, a hollow core fibre, a single-crystal fibre, a photonic crystal fibre, an ultra-violet compatible fibre or a mid-infrared compatible fibre, a multi-mode fiber, or a dielectric material which along its length is reflectively coated,
- the optical waveguide device (10) comprises multiple optical fibres being spliced and/or stacked together, and
- the optical waveguide device (10) comprises multiple optical fibres being coupled in series along the length of the optical waveguide device (10) forming a combined waveguide.

13. Optical resonator according to one of the foregoing claims, wherein
- the optical waveguide device (10) has a length equal to or below 5 cm, in particular equal to or below 2 cm.

14. Optical apparatus (200), including
- a light source device (210), and
- at least one optical resonator (100) according to one of the foregoing claims.

15. Optical apparatus according to claim 14, wherein
- the optical resonator (100) is connected via fibre optical connectors (240) with other components of the optical apparatus (200).

16. Method of manufacturing an optical resonator according to one of the claims 1 to 13, comprising the steps of
(a) fixing the optical waveguide device (10) in the ferrule (20),
(b) shortening and polishing ends of the ferrule (20) including ends of the optical waveguide device (10), so that two ferrule facets (21) and two waveguide end facets (11) are created, the waveguide end facets (11) having a mutual distance equal to a desired length of the resonator section (14), and
(c) providing the resonator mirrors (13) at the waveguide end facets (11).

17. Method of using an optical resonator according to one of the claims 1 to 13, for at least one of
- optical pulse generation, in particular soliton-pulse generation, based on non-linear optical effects,
- frequency comb generation,
- microwave generation,
- channel generation for optical telecommunication,
- resonant super-continuum generation,
- Brillouin frequency shift generation,
- reference frequency generation, and
- optical filtering.

## Patentansprüche

1. Optischer Resonator (100), umfassend
- eine optische Wellenleitereinrichtung (10) mit einer optischen Achse (OA), die sich mit einer longitudinalen Länge zwischen zwei Wellenleiterendfacetten (11) erstreckt,
- Resonatorspiegel (13) umfassend dielektrische Spiegel, die jeweils einen Stapel dielektrischer Schichten (15) aufweisen und auf den Wellenleiterendfacetten (11) zum Einschließen eines Resonatorabschnitts (14) der optischen Wellenleitereinrichtung (10) angeordnet sind, und
- eine Hülse (20) mit zwei Hülsenfacetten (21), wobei die optische Wellenleitereinrichtung (10) an der Hülse (20) montiert ist, wobei
- die Hülse (20) sich über die gesamte longitudinale Länge der optischen Wellenleitereinrichtung (10) erstreckt,
**dadurch gekennzeichnet, dass**
- die Resonatorspiegel (13) eine passive optische Cavity bereitstellen, wobei
- einer der Resonatorspiegel (13) eine Reflektivität von mindestens 99,9 % und der andere Resonatorspiegel ein Reflektivität von mindestens 99 % aufweist.

2. Optischer Resonator gemäß Anspruch 1, wobei
- der optische Resonator (100) zur Lichtkopplung über einen direkten Kontakt der Enden der optischen Wellenleitereinrichtung (10), enthaltend die Resonatorspiegel (13), mit benachbarten Wellenleitern angepasst ist.

3. Optischer Resonator gemäß einem der vorhergehenden Ansprüche, wobei
- die Wellenleiterendfacetten (11) mit den Hülsenfacetten (21) ausgerichtet sind, und
- die Resonatorspiegel (13) die Hülsenfacetten (21) zumindest teilweise abdecken.

4. Optischer Resonator gemäß einem der vorhergehenden Ansprüche, wobei
- die dielektrischen Schichten (15) in mindestens einem der Stapel von dielektrischen Schichten variierende Dicken aufweisen, wobei
- die Dicken der dielektrischen Schichten (15) zum Einstellen einer Gruppengeschwindigkeitsdispersion des optischen Resonators (100) ausgewählt sind.

5. Optischer Resonator gemäß einem der vorhergehenden Ansprüche, wobei
- die dielektrischen Spiegel so angeordnet sind, dass weniger empfindliche dielektrische Schichten an den äußeren Enden des optischen Resonators freigelegt sind, und/oder
- die Resonatorspiegel (13) so angeordnet sind, dass ihre reflektierenden Oberflächen mindestens in der Mitte der Wellenleiterendfacetten (11) orthogonal zur optischen Achse (OA) der optischen Wellenleitereinrichtung (10) sind.

6. Optischer Resonator gemäß einem der vorhergehenden Ansprüche, wobei
- die Resonatorspiegel (13) gekrümmte Spiegel sind, wobei eine Krümmung ausgewählt ist, um die Rückreflexion von Lichtfeldern in die optische Wellenleitereinrichtung (10) zu optimieren.

7. Optischer Resonator gemäß Anspruch 6, wobei
- mindestens einer der Resonatorspiegel (13) einen Krümmungsradius aufweist, der so gewählt ist, dass er eine diffraktionsbezogene Strahlaufweitung des aus der optischen Wellenleitereinrichtung (10) austretenden Lichtfeldes kompensiert.

8. Optischer Resonator gemäß einem der vorhergehenden Ansprüche, wobei
- die optische Wellenleitereinrichtung (10) als ein monomodaler Lichtwellenleiter mit einem Wellenleiterkern und einer Wellenleiterummantelung konfiguriert ist.

9. Optischer Resonator gemäß Anspruch 8, wobei
- die optische Wellenleitereinrichtung (10) einen Kerndurchmesser des Wellenleiterkerns aufweist, der an einen Kerndurchmesser einer optischen Monomodefaser angepasst ist, und/oder
- die optische Wellenleitereinrichtung (10) einen Außendurchmesser gleich oder kleiner als 125 µm und einen Modenfelddurchmesser gleich oder kleiner als 100 µm aufweist.

10. Optischer Resonator gemäß einem der vorhergehenden Ansprüche, wobei
- die optische Wellenleitereinrichtung (10) einen inneren, sich verjüngenden Abschnitt (16) aufweist, und/oder
- die optische Wellenleitereinrichtung (10) mehrere Abschnitte (17) umfasst, die einen kombinierten Wellenleiter bilden, wobei jeder Abschnitt spezifische Wellenleitereigenschaften aufweist.

11. Optischer Resonator gemäß einem der vorhergehenden Ansprüche, wobei
- die optische Wellenleitereinrichtung (10) mindestens eine optische Faser umfasst und die Hülse (20) eine Faserhülse umfasst.

12. Optischer Resonator gemäß Anspruch 11, umfassend mindestens eines der Merkmale
- die mindestens eine optische Faser umfasst eine Monomodefaser, eine polarisationserhaltende Faser, eine dispersionskompensierte Faser, eine hoch-nichtlineare Faser, eine Hohlkernfaser, eine Monokristall-Faser, eine photonische Kristallfaser, eine ultraviolett-kompatible Faser oder eine Mittelinfrarot-kompatible Faser, eine Multimodefaser oder ein dielektrisches Material, das entlang seiner Länge reflektierend beschichtet ist,
- die optische Wellenleitereinrichtung (10) umfasst mehrere optische Fasern, die miteinander verbunden und/oder gestapelt sind, und
- die optische Wellenleitereinrichtung (10) umfasst mehrere optische Fasern, die entlang der Länge der optischen Wellenleitereinrichtung (10) in Reihe gekoppelt sind und einen kombinierten Wellenleiter bilden.

13. Optischer Resonator gemäß einem der vorhergehenden Ansprüche, wobei
- die optische Wellenleitereinrichtung (10) eine Länge gleich oder kleiner als 5 cm, insbesondere gleich oder kleiner als 2 cm aufweist.

14. Optische Vorrichtung (200), enthaltend
- eine Lichtquelleneinrichtung (210), und
- mindestens einen optischen Resonator (100) gemäß einem der vorhergehenden Ansprüche.

15. Optische Vorrichtung gemäß Anspruch 14, wobei
- der optische Resonator (100) über faseroptische Verbinder (240) mit anderen Komponenten der optischen Vorrichtung (200) verbunden ist.

16. Verfahren zur Herstellung eines optischen Resonators gemäß einem der Ansprüche 1 bis 13, umfassend die Schritte
(a) Befestigen der optischen Wellenleitereinrichtung (10) in der Hülse (20),
(b) Kürzen und Polieren der Enden der Hülse (20), einschließend die Enden der optischen Wellenleitereinrichtung (10), so dass zwei Hülsenfacetten (21) und zwei Wellenleiterendfacetten (11) erzeugt werden, wobei die Wellenleiterendfacetten (11) einen gegenseitigen Abstand aufweisen, der gleich einer gewünschten Länge des Resonatorabschnitts (14) ist, und
(c) Bereitstellen der Resonatorspiegel (13) an den Wellenleiterendfacetten (11).

17. Verfahren zur Verwendung eines optischen Resonators gemäß einem der Ansprüche 1 bis 13 für mindestens eines der folgenden Verfahren
- optische Impulserzeugung, insbesondere Soliton-Pulserzeugung, basierend auf nichtlinearen optischen Effekten,
- Frequenzkammerzeugung,
- Mikrowellenerzeugung,
- Kanalerzeugung für die optische Telekommunikation,
- resonante Superkontinuum-Erzeugung,
- Brillouin-Frequenzverschiebung-Erzeugung,
- Referenzfrequenz-Erzeugung, und
- optische Filterung.

## Revendications

1. Résonateur optique (100), comprenant
- un dispositif de guide d'onde optique (10) ayant un axe optique (OA) et s'étendant avec une longueur longitudinale entre deux facettes d'extrémité de guide d'onde (11),
- des miroirs de résonateur (13) comprenant des miroirs diélectriques ayant chacun une pile de couches diélectriques (15) et étant agencés sur les facettes d'extrémité de guide d'onde (11) pour renfermer une section de résonateur (14) du dispositif de guide d'onde optique (10), et
- une férule (20) ayant deux facettes de férule (21), dans lequel le dispositif de guide d'onde optique (10) est monté sur la férule (20), dans lequel
- la férule (20) s'étend suivant la longueur longitudinale totale du dispositif de guide d'onde optique (10),
**caractérisé en ce que**
- les miroirs de résonateur (13) fournissent une cavité optique passive, dans lequel
- l'un des miroirs de résonateur (13) a une réflectivité d'au moins 99,9 % et l'autre miroir de résonateur a une réflectivité d'au moins 99 %.

2. Résonateur optique selon la revendication 1, dans lequel
- le résonateur optique (100) est adapté pour un couplage de lumière via un contact direct des extrémités du dispositif de guide d'onde optique (10) incluant les miroirs de résonateur (13) à des guides d'ondes adjacents.

3. Résonateur optique selon l'une des revendications précédentes, dans lequel
- les facettes d'extrémité de guide d'onde (11) sont alignées avec les facettes de férule (21), et
- les miroirs de résonateur (13) couvrent au moins partiellement les facettes de férule (21).

4. Résonateur optique selon l'une des revendications précédentes, dans lequel
- les couches diélectriques (15) dans au moins l'une des piles de couches diélectriques ont des épaisseurs variables, dans lequel
- les épaisseurs des couches diélectriques (15) sont choisies pour ajuster une dispersion de vitesse de groupe du résonateur optique (100).

5. Résonateur optique selon l'une des revendications précédentes, dans lequel
- les miroirs diélectriques sont agencés de sorte qu'une quantité moindre de couches diélectriques sensibles sont exposées au niveau des extrémités extérieures du résonateur optique, et/ou
- les miroirs de résonateur (13) sont agencés de sorte que leurs surfaces réfléchissantes sont orthogonales à l'axe optique (OA) du dispositif de guide d'onde optique (10) au moins au centre des facettes d'extrémité de guide d'onde (11).

6. Résonateur optique selon l'une des revendications précédentes, dans lequel
- les miroirs de résonateur (13) sont des miroirs incurvés avec une courbure qui est sélectionnée pour optimiser une rétro-réflexion de champs de lumière dans le dispositif de guide d'onde optique (10).

7. Résonateur optique selon la revendication 6, dans lequel
- au moins l'un des miroirs de résonateur (13) a un rayon de courbure sélectionné de façon à compenser une expansion de faisceau liée à la diffraction du champ de lumière sortant du dispositif de guide d'onde optique (10).

8. Résonateur optique selon l'une des revendications précédentes, dans lequel
- le dispositif de guide d'onde optique (10) est configuré en tant que guide d'onde optique monomode avec un cœur de guide d'onde et une gaine de guide d'onde.

9. Résonateur optique selon la revendication 8, dans lequel
- le dispositif de guide d'onde optique (10) a un diamètre de cœur du cœur de guide d'onde adapté à un diamètre de cœur d'une fibre monomodale optique, et/ou
- le dispositif de guide d'onde optique (10) a un diamètre extérieur inférieur ou égal à 125 µm et un diamètre de champ de mode inférieur ou égal à 100 µm.

10. Résonateur optique selon l'une des revendications précédentes, dans lequel
- le dispositif de guide d'onde optique (10) a une section effilée intérieure (16), et/ou
- le dispositif de guide d'onde optique (10) comprend de multiples sections (17) formant un guide d'onde combiné, dans lequel chaque section a des propriétés de guide d'onde spécifique.

11. Résonateur optique selon l'une des revendications précédentes, dans lequel
- le dispositif de guide d'onde optique (10) comprend au moins une fibre optique et la férule (20) comprend une férule de fibre.

12. Résonateur optique selon la revendication 11, comprenant au moins l'une des particularités
- l'au moins une fibre optique comprend une fibre monomodale, une fibre de maintien de polarisation, une fibre à compensation de dispersion, une fibre hautement non linéaire, une fibre à cœur creux, une fibre nanocristalline, une fibre à cristal photonique, une fibre compatible avec les ultraviolets, ou une fibre compatible avec l'infrarouge moyen, une fibre multimodale, ou un matériau diélectrique qui comporte un revêtement réfléchissant suivant sa longueur,
- le dispositif de guide d'onde optique (10) comprend de multiples fibres optiques qui sont épissées et/ou empilées ensemble, et
- le dispositif de guide d'onde optique (10) comprend de multiples fibres optiques qui sont couplées en série suivant la longueur du dispositif de guide d'onde optique (10) formant un guide d'onde combiné.

13. Résonateur optique selon l'une des revendications précédentes, dans lequel
- le dispositif de guide d'onde optique (10) a une longueur inférieure ou égale à 5 cm, notamment inférieure ou égale à 2 cm.

14. Appareil optique (200), comportant
- un dispositif de source de lumière (210), et
- au moins un résonateur optique (100) selon l'une des revendications précédentes.

15. Appareil optique selon la revendication 14, dans lequel
- le résonateur optique (100) est connecté via des connecteurs à fibre optique (240) à d'autres composants de l'appareil optique (200).

16. Procédé de fabrication d'un résonateur optique selon l'une des revendications 1 à 13, comprenant les étapes de
(a) fixation du dispositif de guide d'onde optique (10) dans la férule (20),
(b) raccourcissement et polissage d'extrémités de la férule (20) comportant des extrémités du dispositif de guide d'onde optique (10), de sorte que deux facettes de férule (21) et deux facettes d'extrémité de guide d'onde (11) sont créées, les facettes d'extrémité de guide d'onde (11) ayant une distance mutuelle égale à une longueur souhaitée de la section de résonateur (14), et
(c) fourniture des miroirs de résonateur (13) au niveau des facettes d'extrémité de guide d'onde (11).

17. Procédé d'utilisation d'un résonateur optique selon l'une des revendications 1 à 13, pour au moins l'un parmi
- une génération d'impulsion optique, notamment une génération d'impulsion soliton, d'après des effets optiques non linéaires,
- une génération de peigne de fréquences,
- une génération de micro-onde,
- une génération de canal pour une télécommunication optique,
- une génération de super-continuum résonant,
- une génération de décalage de fréquence de Brillouin,
- une génération de fréquence de référence, et
- un filtrage optique.
